# EUROPÄISCHE PATENTANMELDUNG

(11) **EP 4 586 033 A1**
(43) Veröffentlichungstag der Anmeldung: **16.07.2025**
(21) Anmeldenummer: 24217011.6
(22) Anmeldetag: 03.12.2024
(51) Int. Cl.: G05B 23/02

(54) **VERFAHREN UND SYSTEM ZUM ERKENNEN UND BEHEBEN VON FEHLFUNKTIONEN EINER MASCHINE**

(30) Priorität: 09.01.2024 DE 102024100433
(71) Anmelder: Krones AG, 93073 Neutraubling (DE)
(72) Erfinder: Bogner, Christoph, 93073 Neutraubling (DE)
(74) Vertreter: Grünecker Patent- und Rechtsanwälte PartG mbB

(57) **Zusammenfassung**

Die Erfindung betrifft ein Verfahren und System zum Erkennen und Beheben von Fehlfunktionen einer Maschine, insbesondere einer Maschine in einer Maschinenlinie zum Abfüllen und Verpacken von Lebensmitteln und/oder Getränken. Das Verfahren startet mit dem Empfangen eines Sensorsignals von der Maschine. Das Sensorsignal kann eine Fehlfunktionen der Maschine angeben und einen Kontext der Fehlfunktion umfassen. Daraufhin wird eine Anleitung zum Beheben der Fehlfunktion identifiziert, die aus einer Anleitungs-Datenbank basierend auf dem Kontext der Fehlfunktion ausgewählt wird. Ein Bediener der Maschine wird benachrichtig und erhält eine Information über die Fehlfunktion der Maschine und gleichzeitig die identifizierte Anleitung zum Beheben der erkannten Fehlfunktion. Der Bediener hat die Möglichkeit, eine geänderte Anleitung zum Beheben der Fehlfunktion der Maschine zu erstellen und zurück an die Datenbank zu senden. Die geänderte Anleitung wird dann in der Anleitungs-Datenbank gespeichert und mit dem Sensorsignal verknüpft, wodurch sie mittels dem Kontext der Fehlfunktion identifizierbar ist.

## Beschreibung

Die Erfindung betrifft ein Verfahren und System zum Erkennen und Beheben von Fehlfunktionen einer Maschine, insbesondere einer Maschine in einer Maschinenlinie zum Abfüllen und Verpacken von Lebensmitteln und/oder Getränken.

Die zunehmende Komplexität von Maschinenlinien, insbesondere in Maschinenlinien zum Abfüllen und Verpacken von Lebensmitteln und/oder Getränken, stellt ein signifikantes Problem für die Instandhaltung und Fehlerdiagnose dar. Moderne Abfüllanlagen sind durch eine Vielzahl von Einzelkomponenten und deren Interaktionen gekennzeichnet, was die Lokalisierung und Behebung von Fehlern zu einer anspruchsvollen und zeitintensiven Aufgabe macht. Die derzeitigen Verfahren zur Fehlerbehebung sind vielfach nicht ausreichend, um den gestiegenen Anforderungen gerecht zu werden.

Bekannte Dokumentationssysteme, meist in Form umfangreicher PDF-Dateien, sind nicht nur unhandlich, sondern auch statisch. Sie bieten wenig Unterstützung bei der interaktiven Problemlösung und sind oft nicht auf dem neuesten Stand der jeweiligen Anlagenkonfiguration. Bediener müssen sich oft durch viele Seiten Text und Diagramme arbeiten, um spezifische Informationen zu finden, was wertvolle Zeit in Anspruch nimmt und das Risiko erhöht, dass relevante Informationen übersehen werden. Dieses Vorgehen ist besonders problematisch bei unvorhergesehenen Fehlern, die außerhalb der Standardprozeduren liegen.

Darüber hinaus ist der Prozess der Fehlersuche und -behebung oft ein isoliertes Ereignis. Selbst wenn ein Bediener ein Problem erfolgreich löst, wird die Lösung selten in einer Weise dokumentiert, die für andere Bediener zugänglich oder verständlich ist. Dies führt zu einer ineffizienten Wissensweitergabe und zu einer Wiederholung der Fehlerbehebungsprozesse bei ähnlichen oder identischen Problemen in der Zukunft. Das Fehlen eines integrierten Systems zur Fehlererfassung und -dokumentation verhindert den Aufbau einer Wissensbasis, die für kontinuierliche Verbesserungen und schnelle Reaktionszeiten unerlässlich ist.

Aktuelle Systeme haben somit oft die Nachteile eines hohen Zeitaufwands für die Problemdiagnose und -lösung, einer ineffizienten Nutzung von Wissen und Erfahrungen und eine begrenzte Fähigkeit zur Adaption an neue oder veränderte Anlagenkonfigurationen. Diese Faktoren können zu längeren Ausfallzeiten, erhöhten Betriebskosten und einer geringeren Flexibilität in der Produktion führen.

Es besteht daher ein Bedarf an einer Lösung, die diese Nachteile im Stand der Technik überwindet und somit eine effiziente dynamische Technik zum Erkennen und Beheben von Fehlfunktionen von Maschinen für Abfüll- und Verpackungsmaschinen, Linien und Anlagen auf der Grundlage eines digitalen Zwillings bereitstellt.

Die Aufgabe wird erfindungsgemäß durch ein Verfahren gemäß Anspruch 1 und ein System gemäß Anspruch 10 gelöst. Ausführungsformen und Weiterbildungen sind in den Unteransprüchen erfasst.

Eine Ausführungsform der Erfindung betrifft ein Verfahren zum Erkennen und Beheben von Fehlfunktionen einer Maschine, insbesondere einer Maschine in einer Maschinenlinie zum Abfüllen und Verpacken von Lebensmitteln und/oder Getränken. Das Verfahren startet mit dem Empfangen eines Sensorsignals von der Maschine. Das Sensorsignal kann eine Fehlfunktionen der Maschine angeben und einen Kontext der Fehlfunktion umfassen. Daraufhin wird eine Anleitung zum Beheben der Fehlfunktion identifiziert, die aus einer Anleitungs-Datenbank basierend auf dem Kontext der Fehlfunktion ausgewählt wird. Ein Bediener der Maschine wird benachrichtigt und erhält eine Information über die Fehlfunktion der Maschine und gleichzeitig die identifizierte Anleitung zum Beheben der erkannten Fehlfunktion. Der Bediener hat die Möglichkeit, eine geänderte Anleitung zum Beheben der Fehlfunktion der Maschine zu erstellen und zurück an die Datenbank zu senden. Die geänderte Anleitung wird dann in der Anleitungs-Datenbank gespeichert und mit dem Sensorsignal verknüpft, wodurch sie mittels dem Kontext der Fehlfunktion identifizierbar ist.

Eine weitere Ausführungsform der Erfindung betrifft ein System, welches das Verfahren implementiert.

Beispielhafte Aspekte der Erfindung sind in den Zeichnungen dargestellt. Es zeigen:
**Figur 1****:** ein Diagramm, das eine Übersicht über die wesentlichen Elemente und die Grundstruktur der Erfindung zeigt;
**Figur 2****:** eine beispielhafte Benutzerschnittstelle zum Anzeigen und Bearbeiten von Anleitungen;
**Figur 3****:** eine beispielhafte Anlagenkonfiguration für PET-Behälter und Klebegebinde;
**Figur 4****:** eine beispielhafte Anlagenkonfiguration für PET-Behälter und Schrumpfpacker;
**Figur 5****:** eine beispielhafte Anlagenkonfiguration für Dosen oder Glasflaschen; und
**Figur 6****:** eine beispielhafte Anlagenkonfiguration für Dosen.

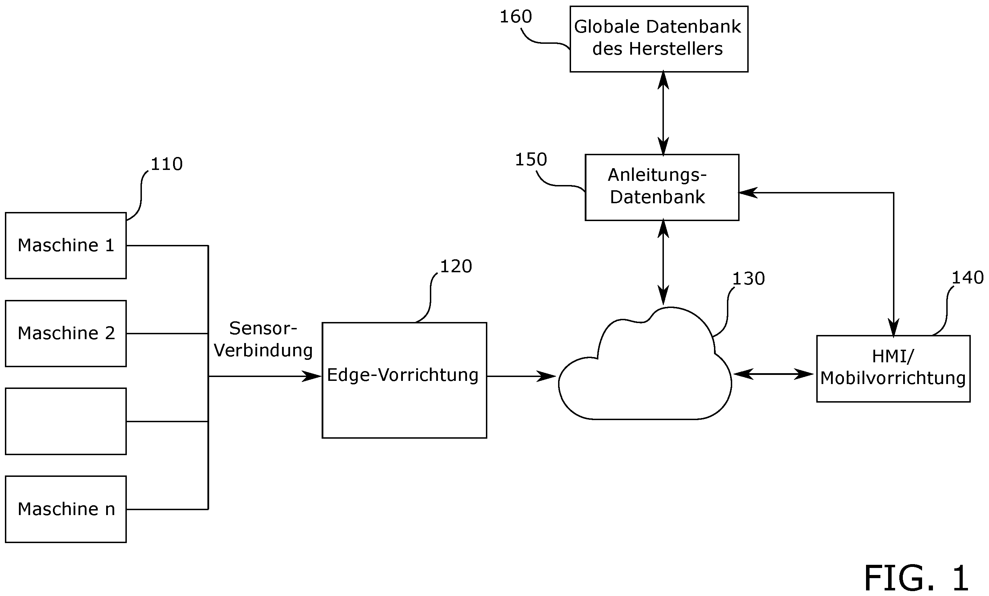

Die Erfindung zielt darauf ab, nicht nur eine effizientere Fehlererkennung bereitzustellen, sondern gleichzeitig auch eine gezielte Lösungsstrategie für die Behebung des erkannten Maschinenfehlers mitzuliefern. Figur 1 zeigt eine Übersicht über die wesentlichen Elemente und die Grundstruktur der Erfindung. Eine Maschinenanlage gemäß Ausführungsformen umfasst eine oder mehrere Maschinen 110, die mit einer Sensorverbindung mit einer Edge-Vorrichtung 120 verbunden sind.

Gemäß Ausführungsformen können Maschinenprobleme oder Fehlfunktionen einer Maschine 110 mit Hilfe von Sensoren gemessen werden. Die Sensorwerte können dann über die Edge-Vorrichtung 120 an einen Computer 130, wie beispielsweise einen Server oder eine Cloud, zur weiteren Verarbeitung übertragen werden.

Die an den Maschinen 110 angeschlossenen Sensoren können verschiedene physikalische und operationale Parameter erfassen, die zur Zustandsüberwachung und Fehlererkennung verwendet werden können. Verschiedene Sensoren wie Vibrationssensoren, Temperaturfühler, Drucksensoren und/oder Durchflussmesser können strategisch an kritischen Punkten der Maschine angebracht werden. Beispielsweise können Vibrationssensoren Unregelmäßigkeiten im Betrieb von Lagern oder Getrieben erkennen, während Temperaturfühler überhitzte Komponenten identifizieren können. Man beachte, dass diese genannten Sensoren nur beispielhaft sind und noch viele weitere Arten der Fehlererkennung mittels Sensoren hierin Anwendung finden können.

Wenn die erfassten Daten an die Edge-Vorrichtung 120 übermittelt werden, kann diese die Sensorsignale mit einem Kontext versehen, um die Sensordaten effektiv für die Fehlerdiagnose zu nutzen. Gemäß Ausführungsformen können die Sensorsignale bereits beim Erstellen am Sensor der entsprechenden Maschine 110 mit einem Kontext versehen werden.

Der Kontext kann eine Angabe zu einer Art des Fehlers, eine Angabe zu einem betroffenen Bauteil und/oder ein spezifischer Parameter sein, der von einem Normalzustand abweicht. Zu dem Kontext können die Identifikation der spezifischen Maschine 110 oder Komponente gehören, die Umgebungsbedingungen und/oder der operationale Zustand zum Zeitpunkt der Datenerfassung. Beispielsweise kann jeder Sensor mit einer eindeutigen ID versehen sein, die ihn einer bestimmten Maschine oder Komponente zuordnet. Gemäß Ausführungsformen können Sensoren auch zusätzliche Daten wie Raumtemperatur, Luftfeuchtigkeit oder Betriebszeiten erfassen, um die Rahmenbedingungen des Betriebs festzuhalten oder Betriebsmodi wie Lastzustände, Geschwindigkeiten oder Produktionszahlen können zusammen mit den Sensordaten aufgezeichnet werden. Es kann mittels den Sensorwerten auf verschiedene Arten festgestellt werden, dass eine Fehlfunktion der Maschine vorliegt.

Die Sensordaten können zusammen mit dem Kontext in Echtzeit oder in festgelegten Intervallen von der Edge-Vorrichtung 120 an den Server 130 gesendet werden. Die Datenübertragung kann über kabelgebundene Netzwerke (Ethernet), über das Internet oder mittels drahtlosen Technologien (WLAN, Bluetooth, ZigBee) erfolgen.

Die Logik zum Erkennen von Maschinenproblemen und Fehlfunktionen der Maschine 110 kann an der Maschine 110 selbst oder an dem Server 130 ausgeführt werden. Beispielsweise kann Software im Server 130 Algorithmen des maschinellen Lernens und/oder der Mustererkennung verwenden, um aus den Sensordaten und dem Kontext Rückschlüsse zu ziehen und Fehler zu identifizieren.

Zur Lösung und Behebung der Fehlfunktion kann der Server 130 auf eine Anleitungs-Datenbank 150 zugreifen, in der eine Vielzahl von verschiedenen Anleitungen enthalten sind. Die Anleitungs-Datenbank kann in dem Server 130 implementiert sein, oder kann davon getrennt in einer weiteren Computervorrichtung implementiert sein. Durch Analyse des Kontext kann in der Anleitungs-Datenbank 150 eine oder mehrere Anleitungen identifiziert werden, die zum Beheben der Fehlfunktion der Maschine 110 geeignet ist.

Gemäß Ausführungsformen wird so eine effiziente und systematische Fehlerbehebung ermöglicht, indem automatisiert die relevanten Reparatur- und Wartungsanweisungen für die festgestellten Probleme bereitgestellt werden können. Die Sensordaten und/oder der Kontext der Sensordaten kann/können dabei mit Einträgen in der Lösungs-Datenbank 150 abgeglichen werden, wobei der Kontext der Sensor-Signale beim Identifizieren von Anleitungen berücksichtigt wird. Die Anleitungs-Datenbank 150 umfasst eine Vielzahl von Lösungswegen und Anleitungen für verschiedene Fehlfunktionen, beispielsweise klassifiziert nach Maschinentyp, Fehlerart und/oder Kontext.

Sobald eine passende Lösung bzw. Anleitung in der Anleitungs-Datenbank 150 gefunden ist, kann die entsprechende Anleitung einem Bediener präsentiert werden, beispielsweise indem die Anleitung zusammen mit der Fehlermeldung an das HMI bzw. die Mobilvorrichtung 140 gesendet wird. In diesem Beispiel kann sowohl die Fehlermeldung über den erkannten Fehler an der Maschine 110 als auch die identifizierte Anleitung zum Beheben der Fehlfunktion an das HMI oder die Mobilvorrichtung 140 des Bedieners gleichzeitig gesendet werden. Fehlermeldung und Lösungsanleitung müssen jedoch nicht unbedingt gleichzeitig an den Bediener gesendet werden. Der Bediener kann auch manuell über das HMI oder die Mobilvorrichtung 140 auswählen, dass er eine Lösung des Problems anfordert.

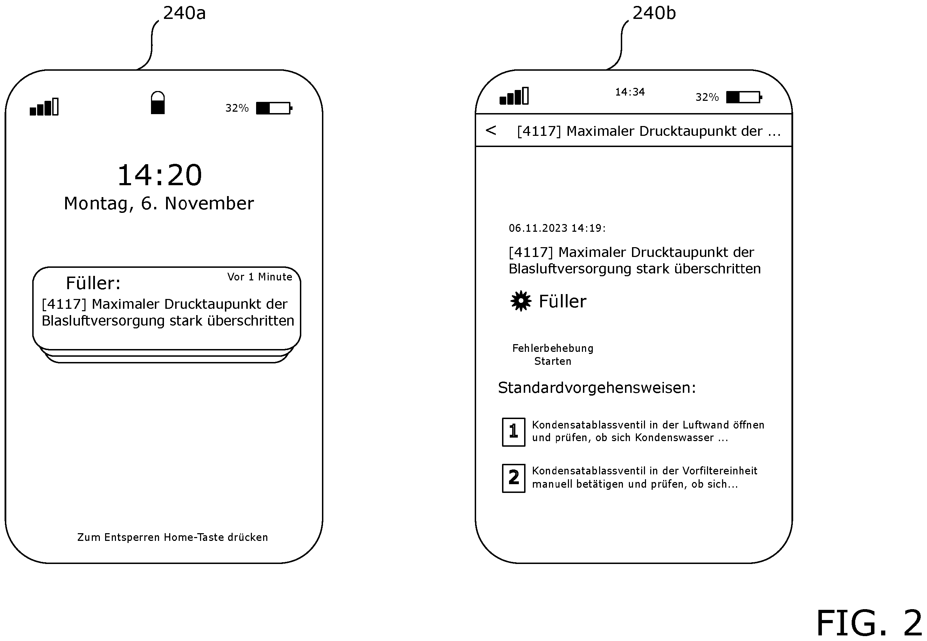

Die Darstellung kann über eine Benutzeroberfläche der Mobilvorrichtung geschehen, wie in Figur 2 beispielhaft gezeigt und weiter unten diskutiert. Die Anleitung kann eine Schrittfür-Schritt-Anleitung sein, in der klare, verständliche Anweisungen zur Fehlerbehebung nacheinander angezeigt werden können. Die Anleitung kann dabei auch Bilder, Diagramme und Videos umfassen, die die Schritte veranschaulichen. Der Bediener kann so alle Schritte einer Anleitung nacheinander sehen, um sich auf den tatsächlich auszuführenden Schritt konzentrieren zu können. Beispielsweise kann ein Bediener durch eine Wischgeste auf einem berührungsempfindlichen Bildschirm zwischen den Schritten oder Springen zur nächsten Anweisung navigieren, wenn die Schritte der vorherigen Anweisung beendet sind.

Die Anleitungs-Datenbank 150 enthält sowohl individuelle, von Kunden erstellte Empfehlungen und Anleitungen als auch Standardanweisungen, die auf dem von einem Hersteller integrierten Branchenwissen basieren (Technische Dokumentation).

Auf diese Anleitungen können Bediener und anderes Werkstattpersonal bei der Fehlersuche zugreifen. Neben dem Zugriff auf die gesamte Datenbank werden die Anleitungen kontextbezogen auf Basis der aufgetretenen/anstehenden Maschinenprobleme vorgeschlagen, wie beschrieben.

Gemäß Ausführungsformen ist es auch möglich, dass ein Bediener selbst Anleitungen erstellen oder ändern kann. Beispielsweise kann ein Bediener über das HMI oder die Mobilvorrichtung 140 eine Anleitung der Anleitungs-Datenbank ändern und/oder ergänzen und diese zurück an die Anleitungs-Datenbank 150 senden. Die geänderte Anleitung kann in der Anleitungs-Datenbank 150 so gespeichert werden, dass die gespeicherte geänderte Anleitung mit dem Sensorsignal verknüpft ist und mittels dem Kontext der Fehlfunktion identifizierbar ist.

Gemäß Ausführungsformen kann die geänderte Anleitung eines der folgenden Merkmale umfassen: einen hinzugefügten und/oder entfernten Kommentar, und/oder eine zusätzliche Handlungsanweisung, die von einem Bediener durchzuführen ist, und/oder eine veränderte Reihenfolge von Handlungsanweisungen, und/oder eine alternative oder korrigierende Angabe zu einer bestehenden Handlungsanweisung oder einem bestehenden Kommentar. Das Speichern der geänderten Anleitung kann eine Validierung eines oder mehrerer korrelierter Datenpunkte in der Anleitung umfassen. Die zugehörigen Regeln können an die individuellen Bedürfnisse und Arbeitsbedingungen in der Produktionslinie angepasst werden.

Diese Erweiterungen bzw. geänderten Anleitungen, die in der Anleitungs-Datenbank 150 gespeichert werden, können somit vom Bediener mit dem ursprünglichen Problem (z.B. mit dem Sensorsignal) verknüpft werden und können beim nächsten Auftreten des Problems vom System vorgeschlagen werden.

Im Allgemeinen kann der Bediener bei der Erstellung einer Anleitung mit der Beschreibung des ersten Schritts beginnen, der automatisch in den Titel der gesamten Problemlösung übernommen werden kann, um die Erstellung von Inhalten so einfach wie möglich zu machen. Eine Anleitung kann allgemein oder in Bezug auf einen bestimmten Kontext (Beziehung zwischen Berührungsmeldungen und Datenpunkt(en)) erstellt werden. Wenn die Erstellung in Bezug auf ein Maschinenproblem erfolgt, kann die erstellte Anleitung einen Verweis auf die zugehörigen Maschinendaten (z.B. Maschinenmeldung, CbM-Regel ("condition based maintenance), Line Control-Ereignis) umfassen.

Gemäß Ausführungsformen kann ein Genehmigungsverfahren für spätere Entwicklungsschritte implementiert werden, um möglicherweise schadhafte oder fehlerhafte Anleitungen auszusortieren. Geänderte Anleitungen können visuell oder textbasiert als solche gekennzeichnet werden, um einem Bediener zu zeigen, dass es sich bei der Anleitung nicht um eine vom Hersteller erzeugte Anleitung handelt.

Gemäß Ausführungsformen können die Anleitungen in der Anleitungs-Datenbank 150 eine standardisierte Form und Format aufweisen. Eine Anleitung beginnt mit einem Titel, der den Inhalt möglichst klar und unmissverständlich wiedergibt. Damit ist sichergestellt, dass ein Bediener sofort erkennt, worum es in der Anleitung geht. Eine optionale Beschreibung kann zusätzliche Informationen und Kontext bereitstellen, die dem Bediener helfen, die Relevanz und den Umfang der Anleitung besser zu verstehen.

Um die Auffindbarkeit in der Datenbank zu erleichtern, kann jede Anleitung einer spezifischen Kategorie zugeordnet werden. Diese Kategorien, wie beispielsweise Fehlersuche, Wartung, Reinigung, Schmierung oder Umstellung, können von einem Benutzer definiert werden und helfen dabei, die Suche und das Auffinden der entsprechenden Anleitungen zu beschleunigen.

Zur weiteren Spezifikation und für einen zielgerichteten Einsatz können in den Anleitungen Referenzen auf das Equipment aufgenommen werden. Diese Referenzen können sich über verschiedene Ebenen des Unternehmens erstrecken, von der Gesamtorganisation bis hinab zur spezifischen Maschine innerhalb einer Produktionslinie. Dies ermöglicht eine granulare Zuordnung und Anwendung der Anleitung.

Anhänge können die Anleitungen ergänzen, indem sie weitere Ressourcen wie Diagramme, Fotos oder Videos zur Verfügung stellen. Die Anleitungen sind in Schritten strukturiert, die den Benutzer durch den Prozess der Fehlerbehebung führen. Dieser schrittweise Ansatz dient dazu, Komplexität zu reduzieren und sicherzustellen, dass alle notwendigen Aktionen in der richtigen Reihenfolge ausgeführt werden.

Zu den administrativen Informationen in den Anleitungen, die automatisch vom System ausgefüllt werden können, gehören die Angaben über den Ersteller der Anleitung sowie das Erstellungs- und das letzte Änderungsdatum. Diese Informationen sind nicht nur für die Nachverfolgbarkeit und Dokumentation wichtig, sondern auch für die Qualitätssicherung und das Management von Wartungshistorien. Dieser strukturierte Ansatz garantiert, dass Anleitungen zum Beheben von Fehlfunktionen nicht nur effektiv und effizient sind, sondern auch besser zu verwalten und zu durchsuchen, was einen reibungslosen Betriebsablauf unterstützen und die Wartungsarbeit vereinfachen kann.

Benutzer können die Liste der vorhandenen Anleitungen beispielsweise mittels Suchkriterien durchsuchen. Beispielsweise kann eine Freitextsuche nach Titel und Beschreibung angewendet werden und/oder es können nützliche Vorschläge und Autovervollständigungsfunktionen vom System implementiert werden. Dies kann dazu beitragen, die Benutzer leichter zum Ziel zu führen. Die Suchfunktion innerhalb der Datenbank 150 kann auch verschiedene Filterkriterien umfassen, wie beispielsweise "Ausstattung" (Jede Ausstattungsebene kann ausgewählt werden (z.B. Unternehmen, Bereich, Maschine)), "Kategorie".

Für eine Fehlfunktion in einer Maschine 110 können auch mehrere Lösungswege bzw. Anleitungen in der Datenbank 150 oder 160 vorhanden sein. Das Identifizieren der Anleitung(en) zum Beheben der Fehlfunktion kann dabei die Schritte des Identifizierens einer Vielzahl von Anleitungen, die für den Kontext des Sensorsignals relevant sind, und Bereitstellen einer Auswahl der Vielzahl von Anleitungen für den Bediener umfassen.

Neben individuell generierten Anleitungen gibt es auch die Möglichkeit, allgemeine Lösungsbeschreibungen aus der Technischen Dokumentation von einem Hersteller zu integrieren. Lösungsbeschreibungen (Beispielsweise aus einer globalen Datenbank 160) können aus der technischen Dokumentation eines Herstellers extrahiert werden (z.B. mittels Künstlicher Intelligenz) und als Teil der Anleitungs-Datenbank 150 integriert werden.

Gemäß Ausführungsformen kann für Anleitungen in der Anleitungs-Datenbank 150 automatisch ein QR-Code erzeugt werden. Diese QR-Codes können beispielsweise ausgedruckt werden und an entsprechende Maschinen angebracht werden. Beim Scannen des QR-Codes mit der Kamera der Mobilvorrichtung 140 kann die zugehörige Anleitung geöffnet werden.

Gemäß Ausführungsformen kann das System eine ausgewählte Anleitung auch automatisch in eine Sprache übersetzen, die der Benutzer ausgewählt hat.

Gemäß weiteren Ausführungsformen kann das System auch die Möglichkeit einer Bewertung von Anleitungen umfassen. Dabei kann das Betriebspersonal die Möglichkeit erhalten, die Anleitungen zu bewerten. Bewertungsmöglichkeiten können dabei beispielsweise sein "Die Anleitung ist nützlich (Gefällt mir)", "Die Anleitung ist im Allgemeinen nützlich", "Die Anleitung ist nützlich in Bezug auf ein aufgetretenes Problem", usw. Darüber hinaus kann auch ein textliches Feedback bereitgestellt werden. Durch diese Bewertungen kann ein Ranking zur Verfügung gestellt werden, sollte es für eine Fehlfunktion mehrere Anleitungen zur Behebung geben. Es kann auch die Qualität verbessert werden.

Diese Benutzerinteraktionen können auch als Grundlage für ein Anreizsystem verwendet werden. Wenn es Anleitungen in Bezug auf aufgetretene Probleme gibt, kann das Personal in der Werkstatt die vorgeschlagenen Anleitungen bewerten. Basierend auf dieser Bewertung listet das System die Anleitungen sortiert nach der Bewertung des Benutzers auf (in den meisten Fällen löst das zuerst angezeigte Artefakt das Problem).

Das System wird umso besser, je mehr Inhalte verfügbar sind, die von den Bedienern in der Produktion erstellt werden. Ein Anreiz für Bediener zum Erstellen noch weiterer Lösungen, könnte das Versenden von Push-Benachrichtigungen in bestimmten Situationen sein, wie "Jemandem hat eine Anweisung gefallen, weil sie hilfreich war", oder "Jemand hat eine Anweisung erweitert". Auch ein Benutzer-Ranking kann in manchen Ausführungsformen implementiert werden, welches die Benutzer mit den meist erstellten Anleitungen oder den besten Anleitungen anzeigt.

Gemäß weiteren Ausführungsformen kann eine Künstliche Intelligenz implementiert werden, wenn die Anleitungs-Datenbank 150 keine passende Lösung vorschlägt. Beispielsweise könnte mit Hilfe von Anwendungen wie Large Language Modellen nach Lösungen gesucht werden, die zuvor mit technischen Dokumentationen der Maschine 110 trainiert wurde.

Figur 2 zeigt zwei Ansichten 240a und 240b einer Mobilvorrichtung 140 gemäß beispielhafter Ausführungsformen. Wie in Ansicht 240a gezeigt, kann beim Feststellen einer Fehlfunktion einer Maschine 110 eine Push-Nachricht auf die Mobilvorrichtung gesendet werden, wodurch ein verantwortlicher Bediener sofort benachrichtigt wird. Der Bediener kann die Nachricht auswählen und kann dadurch mit weiteren Informationen versorgt werden, wie in Ansicht 240b zu sehen. Dabei kann der Bediener sofort mit der Fehlerbehebung starten, indem er die gleichzeitig angezeigten Anleitung(en) auswählt und durchführt. Dabei kann der Bediener direkt mittels der Mobilvorrichtung 140 die Anleitung ändern und zurück an die Datenbank 150 senden.

Ausführungsformen der Erfindung haben einige Vorteile im Vergleich zu bisherigen Systemen. Die Verknüpfung von Anleitungen und Fehlfunktionen ermöglicht einen schnelleren und einfacheren Zugriff bei der Fehlersuche. Ein mobiler Zugang, beispielsweise über die Mobilvorrichtung 140, ermöglicht Ortsunabhängigkeit. Erfahrung des Werkstattpersonals hat direkten Einfluss auf die Lösungsdatenbank. Der Bediener kann eigene Anleitungen integrieren.

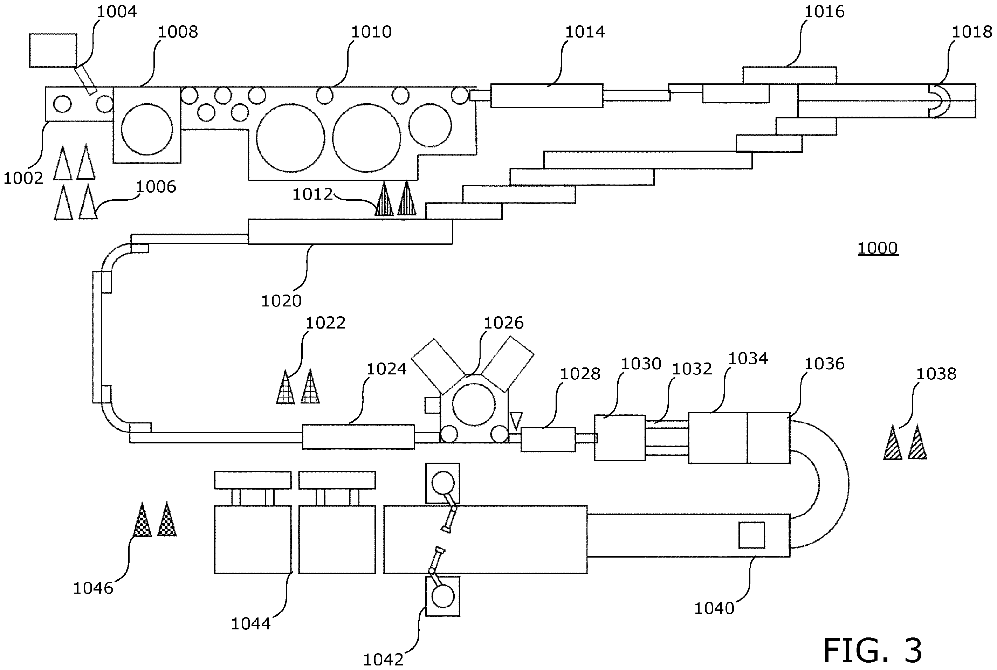

In den folgenden Figuren 3 bis 6 werden verschiedene beispielhafte Anlagenkonfigurationen für verschiedene Flaschenabfüllanlagen beschrieben, in denen die Erfindung oder wenigstens Teile und Aspekte der Erfindung implementiert werden können. Die Beschreibung der Figuren 3 bis 6 soll nur eine allgemeine Übersicht über Maschinen geben, für welche Zustandsdaten gesammelt werden können, auf deren Grundlage das LLM Benutzeranfragen verarbeiten kann.

Figur 3 zeigt eine beispielhafte Anlagenkonfiguration 1000 für PET-Flaschen oder PET-Behälter und Klebegebinde. Wie in Figur 3 zu sehen, umfasst die Anlagenkonfiguration 1000 verschiedenste Module, die eine Linie bilden, an deren Ende fertig abgefüllte PET-Behälter in Form eines Gebindes auf Paletten ausgegeben werden. Einige der Module und Maschinen können dabei optional sein und die Erfindung ist nicht auf die genaue Form und Anordnung der Anlagenkonfigurationen beschränkt.

Die Anlagenkonfiguration 1000 umfasst einen Ofen 1002 für Preforms, eine Preform-Sortierung mit Zuführmaschine 1004 und eine Blasmaschine 1008. Die Module 1002, 1004 und 1008 bilden im Allgemeinen eine Streckblasmaschine, in welcher PET-Behälter aus einem Ausgangsmaterial hergestellt und geformt werden. Die hergestellten PET-Behälter werden weitergeleitet in einen Füller 1010, in dem die Flaschen befüllt werden. Der Füller kann optional einen Rinser umfassen. In den Preforms können sich während der Lagerung oder des Transports verschiedene Partikel wie Staub, Pappe oder Reste von Holzpaletten ablagern. Mit dem Rinser lassen sich diese entfernen. Am Ende des Füllers kann ein Verschließer angeordnet sein, mittels welchem die PET-Behälter nach der Befüllung verschlossen werden.

Optional kann die Anlagenkonfiguration 1000 nach dem Füller 1010 eine Drehvorrichtung umfassen, die bei Heißabfüllung der PET-Behälter zum Einsatz kommt. Über ein oder mehrere Transportbänder 1016, die auch einen Puffer 1018 zum Zwischenladen von befüllten Behältern umfassen können werden die befüllten PET-Behälter zu einem Vereinzeler 1020 und weiter zu einer Trocknungsvorrichtung 1024 geleitet, in welcher die PET-Behälter getrocknet werden.

Nach erfolgter Trocknung werden die PET-Behälter in eine Etikettiermaschine 1026 befördert. Die Etikettiermaschine 1026 kann für verschiedene Etikettiertechniken ausgelegt sein, wie beispielsweise eine Etikettierung mittels Heißleim, Kaltleim, Selbstklebe-Etiketten oder Sleeves. Nach dem Bedrucken oder Etikettieren der PET-Behälter, werden die PET-Behälter durch eine zweite Trocknungsvorrichtung 1028, einen Linienverteiler 1030, Transportbänder 1032, eine Klebegebindeherstellung 1034 und eine Aushärtstrecke zu einem Handle-Applikator geleitet. In der Klebegebindeherstellung 1034 werden die PET-Behälter in bestimmte Gruppengrößen zusammen gruppiert und zu einem Gebinde, wie beispielsweise einem "Sixpack" verpackt. In dem Handle-Applikator wird ein Tragegriff an das Gebinde angebracht, was ein komfortables Tragen des Gebindes ermöglicht. Die fertigen Gebinde werden dann von einem Roboter 1042 zur Lagenherstellung entsprechend angeordnet und von einem Palettierer 1044 auf Paletten verpackt.

In der Anlagenkonfiguration 1000 können an verschiedenen Modulen und Maschinen sogenannte Formatwagen oder Formatregale angeordnet sein, um schnell wechselbare Formatsätze für kurze Umstellzeiten und automatischen Werkzeugwechsel zur Verfügung zu stellen. Beispiele für Formatwagen sind der Formatwagen 1006 für die Blasmaschine 1008, der Formatwagen 1012 für den Füller 1010, der Formatwagen 1022 für die Etikettiermaschine 1026, der Formatwagen 1038 für die Klebegebindeherstellung 1034 und der Formatwagen 1046 für den Palettierer 1044.

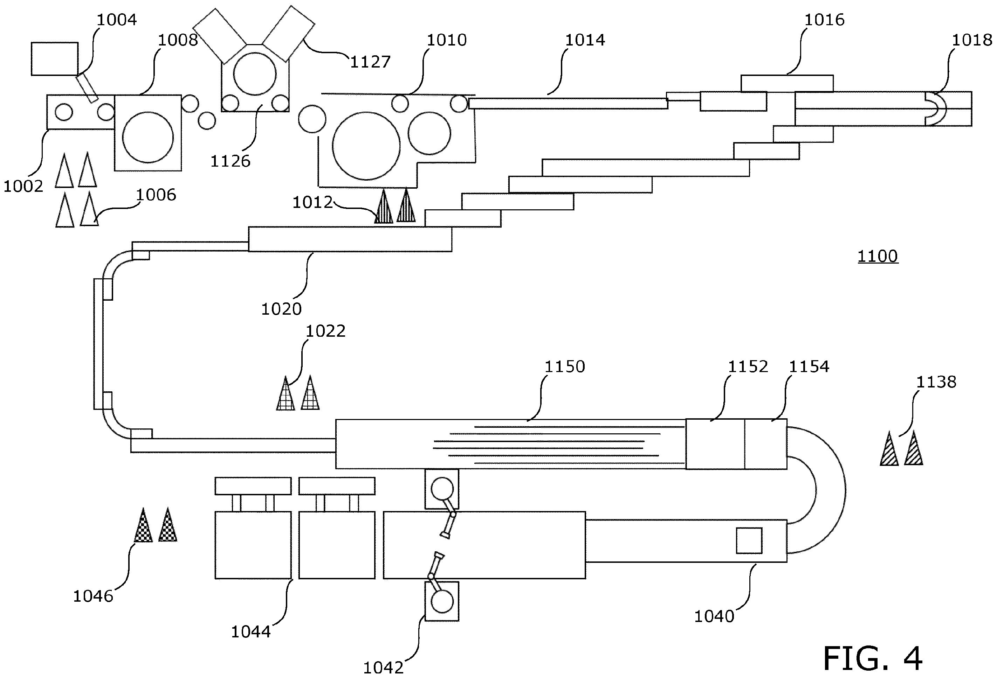

Figur 4 zeigt eine weitere beispielhafte Anlagenkonfiguration 1100 für PET-Behälter und Schrumpfpacker. Die Anlage 1100 aus Figur 4 umfasst viele der Module und Maschinen aus der Anlagenkonfiguration 1000 aus Figur 3, jedoch gibt es einige Unterschiede. Auf die Beschreibung der Module, die bereits in Zusammenhang mit Figur 3 beschrieben sind, wird daher für Figur 4 verzichtet.

Ein wesentlicher Unterschied zwischen den beiden beispielhaften Anlagenkonfigurationen 1000 und 1100 besteht darin, dass die Etikettiermaschine 1126 mit den Etikettiermodulen 1127 bereits nach der Blasmaschine 1008 und vor dem Füller 1008 installiert sein kann. Dafür kann die Anlagenkonfiguration 1100 gleich sechs Transportspuren 1150 umfassen, in die sich die PET-Behälter eindrängeln können. Nachdem die PET-Behälter sich entsprechend in eine der sechs Spuren 1150 eingedrängelt haben, werden sie in das Folieneinschlagmodul 1152 und anschließend in den Schrumpftunnel 1154 befördert.

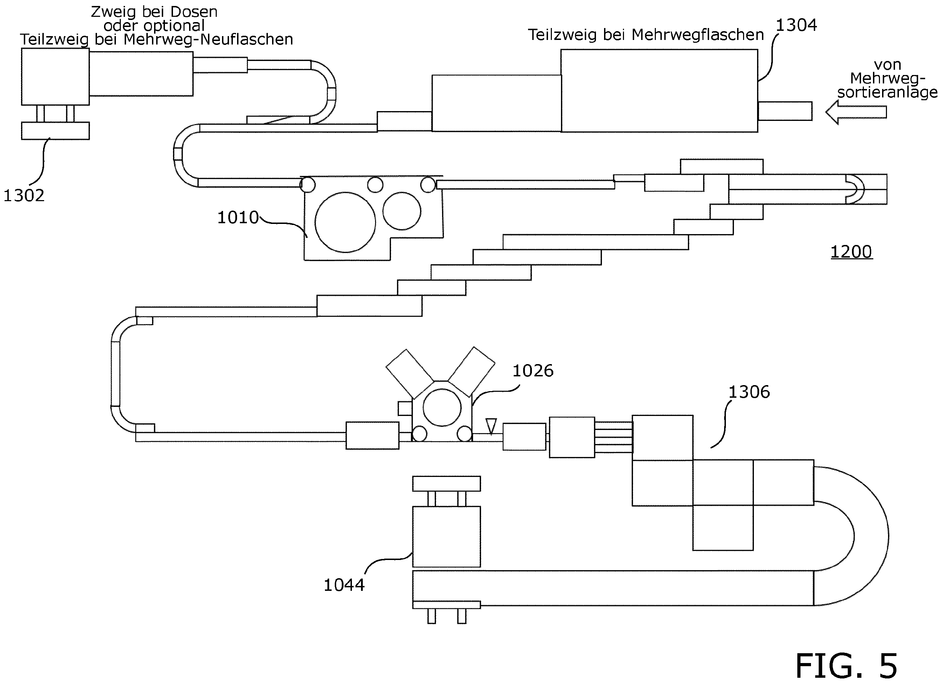

Figur 5 zeigt eine beispielhafte Anlagenkonfiguration 1200 für Dosen oder Glasflaschen. Die beispielhafte Anlagenkonfiguration 1200 aus Figur 5 hat wieder einige Ähnlichkeiten zu den Anlagenkonfigurationen 1000 und 1100 aus Figuren 3 und 4 und die Beschreibung der Anlagenkonfiguration beschränkt sich daher auf die Unterschiede der Anlagenkonfigurationen.

Wie in Figur 5 gezeigt, kann die beispielhafte Anlagenkonfiguration zwei separate Zuführungen umfassen. Eine erste Zufuhr, links in Figur 5, zeigt einen Zweig bei Dosen oder optional einen Teilzweig bei Mehrweg-Neuflaschen. Dabei werden die Behälter, d.h. Dosen oder neue Flaschen, von einem Depalettierer 1302 in die Maschine geführt, wo sie über Transportbänder zu dem Füller 1010 geführt werden. Eine zweite Zufuhr, rechts in Figur 5, zeigt einen Teilzweig bei Mehrwegflaschen, die von einer Mehrwegsortieranlage (nicht abgebildet) in die Anlage eingeleitet werden.

In dem Fall, dass die bereits benutzten Mehrwegflaschen über den Teilzweig bei Mehrwegflaschen in die Anlage 1200 eingeleitet werden, durchlaufen die Mehrwegflaschen zunächst die Reinigungsmaschine oder Waschmaschine 1304. Ein weiterer möglicher Unterschied der beispielhaften Anlagenkonfiguration 1200 ist der Umsetzpacker 1306 nach der Etikettiermaschine 1026. Der Umsetzpacker kann die Flaschen oder Dosen in eine Karton-Clip-Aufbringung oder in Kästen oder beides einsortieren.

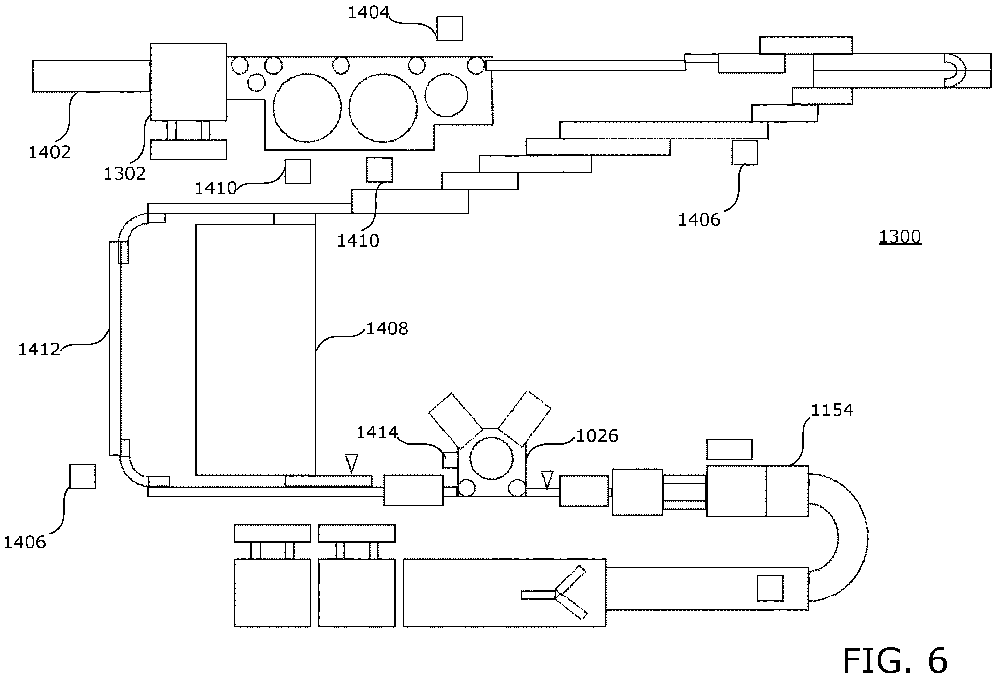

Figur 6 zeigt eine beispielhafte Anlagenkonfiguration 1300 für Dosen, in der wieder die bereits in den anderen Anlagenkonfigurationen beschriebene Elemente nicht mehr beschrieben werden. Die Dosen in der Anlagenkonfiguration 1300 werden von einem Magazin 1402 mit Dosen in den Depalettierer 1302 eingeleitet. Die Dosen werden, nachdem sie den Füller durchlaufen haben und gefüllt sind mittels Verschlussmagazin 1404 verschlossen und über die Transportbänder, wie oben beschrieben, weiter entlang der Anlage 1400 geleitet.

Der optionale Pasteur 1408 kann über den Bypass 1412 umgangen werden, falls dieser nicht benötigt wird. Im Pasteur 1408 können die frisch abgefüllten Produkte für die Konservierung pasteurisiert werden.

Im Gegensatz zu den Anlagenkonfigurationen 1000, 1100 und 1200 sind in der beispielhaften Anlagenkonfiguration 1300 verschiedene Tanks für entsprechende Verbrauchsgüter gezeigt, wie die Tanks 1410 mit Rinsflüssigkeit und/oder dem Abfüllprodukt und den Tanks 1406 mit Bandschmiermittel. Diese Tanks können auch in den bereits oben beschriebenen beispielhaften Anlagenkonfigurationen enthalten sein. In die Tanks 1406 und 1410 können beispielsweise die chemischen Produkte 106, die aus dem Mischer 110 zu den Maschinen geleitet wird, gespeichert werden.

## Patentansprüche

1. Verfahren zum Erkennen und Beheben von Fehlfunktionen einer Maschine (110), insbesondere einer Maschine in einer Maschinenlinie zum Abfüllen und Verpacken von Lebensmitteln und/oder Getränken, wobei das Verfahren umfasst:
Empfangen eines Sensorsignals von der Maschine, wobei das Sensorsignal eine Fehlfunktionen der Maschine angibt und einen Kontext der Fehlfunktion umfasst;
Identifizieren einer Anleitung zum Beheben der Fehlfunktion, wobei das Identifizieren der Anleitung eine Auswahl der Anleitung aus einer Anleitungs-Datenbank (150) basierend auf dem Kontext der Fehlfunktion umfasst;
Erstellen einer Benachrichtigung für einen Bediener der Maschine, wobei die Benachrichtigung eine Information über die Fehlfunktion der Maschine und die identifizierte Anleitung zum Beheben der erkannten Fehlfunktion umfasst;
Ausgeben der Benachrichtigung an den Bediener;
Empfangen einer geänderten Anleitung zum Beheben der Fehlfunktion der Maschine von dem Bediener; und
Speichern der geänderten Anleitung in der Anleitungs-Datenbank, wobei die gespeicherte geänderte Anleitung mit dem Sensorsignal verknüpft ist und mittels dem Kontext der Fehlfunktion identifizierbar ist.

2. Verfahren nach Anspruch 2, wobei die geänderte Anleitung wenigstens umfasst:
einen hinzugefügten und/oder entfernten Kommentar; und/oder
eine zusätzliche Handlungsanweisung, die von einem Bediener durchzuführen ist; und/oder
eine veränderte Reihenfolge von Handlungsanweisungen; und/oder
eine alternative oder korrigierende Angabe zu einer bestehenden Handlungsanweisung oder einem bestehenden Kommentar; und
wobei das Speichern der geänderten Anleitung eine Validierung eines oder mehrerer korrelierter Datenpunkte in der Anleitung umfasst.

3. Verfahren nach Anspruch 1 oder 2, wobei das Identifizieren der Anleitung zum Beheben der Fehlfunktion umfasst:
Identifizieren einer Vielzahl von Anleitungen, die für den Kontext des Sensorsignals relevant sind; und
Bereitstellen einer Auswahl der Vielzahl von Anleitungen für den Bediener.

4. Verfahren nach einem der Ansprüche 1 bis 3, des Weiteren umfassend:
automatisches Übersetzen der Anleitung, die an den Bediener ausgegeben wird, in eine von dem Benutzer ausgewählte Sprache.

5. Verfahren nach einem der Ansprüche 1 bis 4, des Weiteren umfassend:
Validieren der geänderten Anleitung, bevor die geänderte Anleitung mittels dem Kontext der Fehlfunktion identifizierbar ist.

6. Verfahren nach einem der Ansprüche 1 bis 5, wobei Benutzer Zugriff auf die Anleitungs-Datenbank haben und Anleitungen in der Anleitungs-Datenbank von Benutzern bewertbar sind, um ein kontextbezogenes Ranking zu erstellen, und wobei Anleitungen basierend auf dem Kontext und basierend auf dem Ranking ausgewählt werden.

7. Verfahren nach einem der Ansprüche 1 bis 6, des Weiteren umfassend:
automatisches Erzeugen eines QR-Codes, der einen direkten Zugriff auf eine Anleitung in der Anleitungs-Datenbank ermöglicht.

8. Verfahren nach einem der Ansprüche 1 bis 7, wobei die Anleitung eine Schritt-für-Schritt-Anleitung ist, die auf einem Mobilgerät anzeigbar ist.

9. Verfahren nach einem der Ansprüche 1 bis 8, wobei der Kontext umfasst:
eine Angabe zu einer Art des Fehlers, eine Angabe zu einem betroffenen Bauteil und/oder einen spezifischen Parameter, der von einem Normalzustand abweicht.

10. System zum Erkennen und Beheben von Fehlfunktionen einer Maschine (110), insbesondere einer Maschine in einer Maschinenlinie zum Abfüllen und Verpacken von Lebensmitteln und/oder Getränken, wobei das System umfasst:
eine oder mehrere Maschinen (110);
einen oder mehrere Sensoren, die ausgelegt sind, um Daten der einen oder den mehreren Maschinen zu messen;
eine Edge-Vorrichtung (120), die ausgelegt ist, die Daten von dem einen oder den mehreren Sensoren als Sensordaten zu empfangen;
eine Computervorrichtung (130), die mit der Edge-Vorrichtung verbunden ist, wobei die Computervorrichtung eine Anleitungs-Datenbank (150) umfasst und wobei die Computervorrichtung ausgelegt ist zum:
Empfangen des Sensorsignals von der Maschine, wobei das Sensorsignal eine Fehlfunktionen der Maschine angibt und einen Kontext der Fehlfunktion umfasst;
Identifizieren einer Anleitung zum Beheben der Fehlfunktion, wobei das Identifizieren der Anleitung eine Auswahl der Anleitung aus der Anleitungs-Datenbank basierend auf dem Kontext der Fehlfunktion umfasst;
Erstellen einer Benachrichtigung für einen Bediener der Maschine, wobei die Benachrichtigung eine Information über die Fehlfunktion der Maschine und die identifizierte Anleitung zum Beheben der erkannten Fehlfunktion umfasst;
Ausgeben der Benachrichtigung an den Bediener;
Empfangen einer geänderten Anleitung zum Beheben der Fehlfunktion der Maschine von dem Bediener; und
Speichern der geänderten Anleitung in der Anleitungs-Datenbank, wobei die gespeicherte geänderte Anleitung mit dem Sensorsignal verknüpft ist und mittels dem Kontext der Fehlfunktion identifizierbar ist.
